# EUROPEAN PATENT SPECIFICATION

(11) **EP 2 550 588 B1**
(45) Date of publication and mention of the grant of the patent: **08.04.2020**
(21) Application number: 11758872.3
(22) Date of filing: 28.01.2011
(51) Int. Cl.: H04M 1/725, H04M 1/02, G06F 3/14

(54) **METHOD AND APPARATUS FOR PROVIDING CONTENT OVER MULTIPLE DISPLAYS**
VERFAHREN UND VORRICHTUNG ZUR BEREITSTELLUNG VON INFORMATIONEN AUF MEHREREN DISPLAYS
PROCÉDÉ ET APPAREIL PERMETTANT DE FOURNIR UN CONTENU SUR PLUSIEURS ÉCRANS

(30) Priority: 25.03.2010 US 731794
(43) Date of publication of application: 30.01.2013
(73) Proprietor: Nokia Technologies Oy, 02610 Espoo (FI)
(72) Inventor: STEEVES, Gregory, Highgate Greater London N6 4QA (GB); DAVIDSON, Brian, Woking Surrey GU21 3QD (GB); NURMI, Mikko Antero, FI-Tampere 33580 (FI)
(74) Representative: Browne, Robin Forsythe
(86) International application number: PCT/FI2011/050069
(87) International publication number: WO 2011/117460

(56) References cited:
- EP-A1- 2 129 085
- EP-A2- 1 770 473
- EP-A2- 1 770 968
- WO-A2-2004/075169
- US-A1- 2005 083 642
- US-A1- 2005 083 642
- US-A1- 2007 085 759
- US-A1- 2009 143 098
- US-A1- 2009 320 070

## Description

### BACKGROUND

Service providers and device manufacturers (e.g., wireless, cellular, etc.) are continually challenged to deliver value and convenience to consumers by, for example, providing compelling network services and advancing the underlying technologies. One area of interest has been the development of technologies for presenting complex interactive services that often rely on, for instance, a combination of information and/or functions both on a user device and accessed via the Internet. It is noted that traditionally, there are many seams (e.g., points of obstruction for the user) when interacting with such services, particularly when accessing the services using a device with limited display capabilities (e.g., a mobile device, handset, smartphone, etc.). As a result, service providers and device manufacturers face significant technical challenges to providing a user interface or other presentation of services that minimize traditional seams to improve user experience.

US 2005/083642 describes a mobile communications device that includes a first display device and a second display device. The second display device is arranged on, and is movable with respect to, a casing. Movement of the second display device is detected by a sensor. Moreover, the mobile communications device may include a control device for executing application programs such that, when the second display device is moved, there is automatic update of display content on the first display device or the second display device in cooperation with the movement. When the second display device changes from closed status to open status, the control device automatically selects content related to content on the first display device and displays it on the second display device.

In US 2009/320070, a mobile communications device includes a first display device and a second display device. The second display device is arranged on, and is movable with respect to, a casing, and movement of the second display device is detected by a sensor. Moreover, the mobile communications device may include a control device for executing application programs, and when the second display device is moved, automatically updates display content on the first display device or the second display device in cooperation with the movement. When the second display device changes from closed status to open status, the control device automatically selects content related to content on the first display device and displays it on the second display device

US 2007/085759 discloses a method of displaying multimedia data and providing multitasking features and a mobile communications terminal capable of implementing the same; and cradle for the mobile communications terminal. A mobile communications terminal includes a transceiver, a memory, a first display unit, a second display unit, a processor, a sensor to detect a rotational movement of a body, and a cradle for displaying multimedia contents is provided. The display unit can display the multimedia data in a fixed viewing angle regardless of which direction a user rotates the terminal.; A method comprises the steps of displaying multimedia data playback on at least one of a first and a second display screens, displaying information related to the multimedia data, on at least a portion of the at least one of the display screens, providing multimedia control functions and/or indications to the user in a minimally intrusive manner, and displaying a multimedia playback control menu on the at least one of the two display screens.

In US 2009/142098, electronic equipment includes a first output unit configured to output display information onto a display screen, a second output unit configured to output display information to a device to which the display information is output, and an output control unit configured to cause, if predetermined display information is output using both the first output unit and the second output unit, the second output unit to output the portion of the predetermined display information to which it is previously set that it is output to the outside as well as causing the first output unit to output the portion of the predetermined display information from which the portion output by the second output unit is excluded.

### SOME EXAMPLE EMBODIMENTS

Therefore, there is a need for an approach for providing content over multiple displays to efficiently interact with services and/or applications.

In accordance with a first aspect of the invention there is provided a method in accordance with claim 1. In a second aspect of the invention there is provided an apparatus in accordance with claim 9. In a further aspect of the invention, there is provided a computer program product in accordance with claim 17.

According to one embodiment, a method comprises causing, at least in part, presentation of a first content on a first display. The method further comprises receiving an input for activating one or more second displays. The method also comprises automatically selecting a second content based, at least in part, on the first content and the input. The method further comprises causing, at least in part, presentation of the second content on the one or more second displays.

According to another embodiment, an apparatus comprising at least one processor, and at least one memory including computer program code, the at least one memory and the computer program code configured to, with the at least one processor, cause, at least in part, the apparatus to cause, at least in part, presentation of a first content on a first display. The apparatus is further caused to receive an input for activating one or more second displays. The apparatus is also caused to automatically select a second content based, at least in part, on the first content and the input. The apparatus also causes, at least in part, presentation of the second content on the one or more second displays.

According to another embodiment, a computer-readable storage medium carrying one or more sequences of one or more instructions which, when executed by one or more processors, cause, at least in part, an apparatus to cause, at least in part, presentation of a first content on a first display. The apparatus is further caused to receive an input for activating one or more second displays. The apparatus is also caused to automatically select a second content based, at least in part, on the first content and the input. The apparatus is also causes, at least in part, presentation of the second content on the one or more second displays.

Still other aspects, features, and advantages of the invention are readily apparent from the following detailed description, simply by illustrating a number of particular embodiments and implementations, including the best mode contemplated for carrying out the invention.

Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing content over multiple displays, according to one embodiment;
FIG. 2 is a diagram of the components of a display manager, according to one embodiment;
FIG. 3 is a flowchart of a process for providing content over multiple displays, according to one embodiment;
FIG. 4 is a flowchart of process for interacting with content over multiple displays, according to one embodiment;
FIG. 5 is a diagram of a user interface utilized in the processes of FIG. 3, according to one embodiment;
FIGs. 6A-6B are diagrams of user interfaces utilized in the processes of FIG. 4, according to various embodiments;
FIGs. 7A-7F are diagrams of user interfaces utilized in the processes of FIGs. 3 and 4, according to various embodiments, according to various embodiments;
FIG. 8 is a diagram of hardware that can be used to implement an embodiment of the invention;
FIG. 9 is a diagram of a chip set that can be used to implement an embodiment of the invention; and
FIG. 10 is a diagram of a mobile terminal (e.g., handset) that can be used to implement an embodiment of the invention.

### DESCRIPTION OF SOME EMBODIMENTS

Examples of a method, apparatus, and computer program for providing content over multiple displays are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

As used herein, the term content refers to any information or data that may be presented on one or more display units associated with a user equipment. By way of example, content may include any one or more of text, images, videos, audio files, executables, links to executables, and the like. In one embodiment, it is contemplated that the content may be provided by one or more services and/or applications executing on or requested by the user equipment.

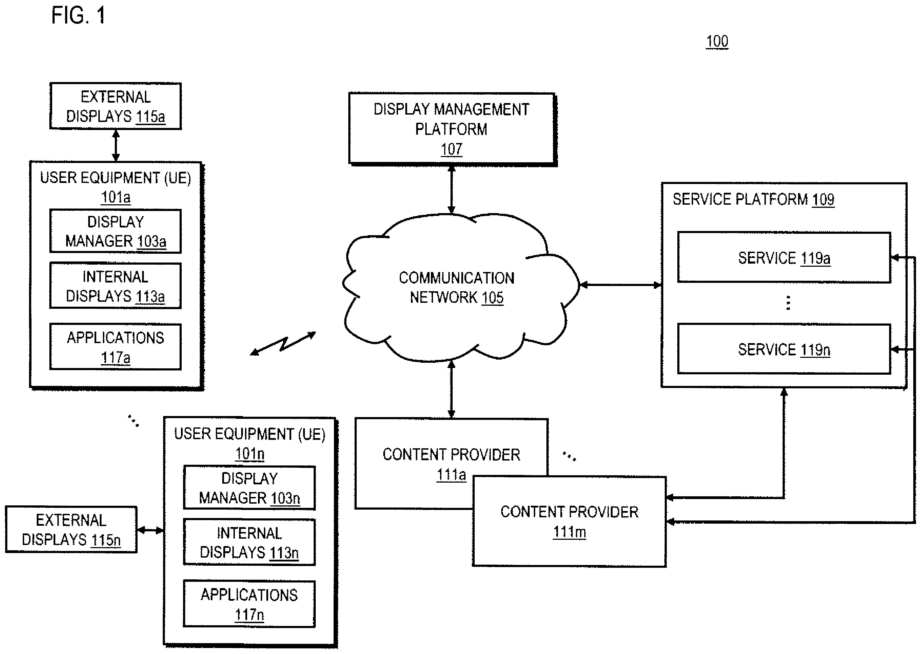

FIG. 1 is a diagram of a system capable of providing content over multiple displays, according to one embodiment. As noted previously, the number, variety, and complexity of applications and services are rapidly increasing, thereby making it challenging for service providers to present the information, output, user interface, etc. from these applications and services in an efficient way that enhances user experience. In response, many modern devices and user equipment (e.g., personal computers, laptops, etc.) can support more than one display unit that can be used independently to show content associated with different services or applications. As technology continues to advance, multiple display technologies are also becoming more common on mobile devices (e.g., handsets, smartphones, e-readers, tablets, wearable devices/computers, etc.).

By way of example, in a multiple display configuration, a user may access a word processing document on one display and a web browser on another display. In this way, users can more efficiently multitask among multiple applications and services, and organize the various corresponding user interfaces. However, traditional approaches to organizing the content presented over multiple displays depend, for the most part, on manual organization by the user. In other words, the user generally has to manually initiate an application and then direct that application to display content on one or more of the displays. As the complexity of the applications and the interactions among the applications grow, the traditional manual process can quickly become overly burdensome to the user. For example, the user may have to manually move one application from one display to another, manually track what applications are currently on which of the multiple displays, etc. in order to find and select one or more combinations of the content from those applications for display on the multiple monitors.

To address this problem, a system 100 of FIG. 1 introduces the capability to automatically select content for presentation on at least one display of a multiple display configuration based, at least in part, on the content currently being presented on at least one other display of the multiple display configuration. More specifically, the system 100 presents content (e.g., content related to an application or service) on a first display, wherein the first display is associated with one or more second displays. By way of example, the association between the displays means, for instance, that content of the multiple displays is provided or directed by a common device, application, service, or the like or by any combination thereof. The system 100 then receives an input for activating one or more of the second displays, or otherwise detects activation of the second display. Following this input or detection, the system 100 selects content that is to be presented on the one or more second displays based, at least in part, on the content of the first display. In the case of a multiple display configuration with more than two displays, the content of subsequently activated displays can be based on the content of the earlier activated displays.

In one embodiment, the displays of a multiple display configuration may be located within the same device (e.g., any of user equipment (UEs) 101a-101n, collectively referred to as UEs 101). For example, the UE 101 may be a device with a dual display form factor (e.g., dual touchscreen displays) mounted on sliding mechanism so that one of the displays is always visible. In this example, activation of one the screens by a physical transformation (e.g., sliding the mechanism to reveal the second screen) can initiate the approach described herein for selecting content to present in the second screen. In another example, the UE 101 may be a device equip with an onboard projector and a built-in display that comprise the multiple display configuration (e.g., a smartphone equipped with a pico projector and touchscreen display). In another embodiment, one or more external display units such as wall projectors may be utilized in combination with the displays within the UEs 101. In yet another embodiment, one or more UEs 101, each equipped with one or more display units, may be utilized together or in any combination with external display units. Display units may be of various types with various technologies including, for example, head-mounted displays, three dimensional displays, electronic ink displays, etc.

In one sample use case, the UE 101 is a dual touchscreen device as described above, where the sliding mechanism is initially in a closed position to hide one of the dual screens. On the visible screen (e.g., the first display), the UE 101 presents a user interface of a camera application showing an image that was captured using the UE 101's onboard camera module. The user actuates the sliding mechanism of the UE 101 to reveal or activate the second display. On this actuation, the system 100 can automatically launch a photo-sharing application and display the user interface of the photo-sharing application on the second screen. Similarly, if the first display is presenting a music player application, activation or sliding to reveal the second screen can automatically select, for instance, an online music store for purchasing additional songs from the currently playing artist. The user interface for the online store may then be presented on the second screen. On closing the sliding mechanism or otherwise deactivating the second display, the user can resume the functions of the content of the first display (e.g., resume the camera application of the first example, or resuming the media player application of the second example).

In another embodiment, activation of the second display can result in presentation of related content (e.g., content selected on the basis of what is currently in the first display) on both the first display and the second display. For example, if the first display is currently showing a captured image, activation of the second display causes the system 100 to replace the content of the first display with, for instance, a photo editing application to modify the image as well as a photo sharing application in the second display. On closing the sliding the mechanism or deactivation of the second display, the original content of the first display (e.g., the camera application showing the captured image) may be restored.

In another sample use case, the UE 101 may be a device equipped with either an internal projector (e.g., the pico-projector discussed above) or an external projector or display. In one embodiment, the UE 101 may display public content (e.g., content intended to be shown to an audience or other users), and then on activation of the second display (e.g., by turning the display on, or performing any another action to activate the display), the system 100 may select private content related to the public content for presentation on the second display.

For example, the user may want to present content to an audience via one or more public display units, while controlling the public content through one or more private displays. The user may want to automatically access related applications, services, etc. and/or view information about the presentation on their private display for better storytelling ability, for being able to provide answers to the questions asked by the audience, etc. For example, the selection of content for the second or private display may include invoking another application and/or service (e.g., a search engine) to obtain related content (e.g., background information regarding objects displayed on the first display) for presentation on the private or second display. In another example, the application may be a social application or service that provides the user with status information on people appearing in first display. This status information may then be privately presented to the user on the second display. In one embodiment, the invoking process may be configured in a way that certain entries (e.g., display activations) can automatically activate desired services.

In another embodiment, the system 100 may present the same media content (e.g., video content) on both the first display (e.g., the public display) and the second display (e.g., the private display). The system 100 can then enable the user to independently control playback of the content in the private display with respect to the public display. For example, the user can advance or rewind the playback of the video on the private display to find segments of interest or to preview the content while presenting the media content at a different playback position in the first screen. For example, the user may want to bring the audience attention to a certain passage of the video or audio stream. The user may do so by searching for the passage on the stream on their private display while the audience is watching (or listening to) the normally played stream in the public display. In addition or alternatively, the user may specify a fixed delay between a video stream appearing on the public display with the stream appearing on the private display, so that the user can prepare the audience for an upcoming scene. In certain embodiments, the system 100 enables the user to watch the live event on one display and pick pieces of the stream to record, replay and edit on a second display.

In another embodiment, the system 100 enables the user to combine content on the first display (e.g., a live sports event) with other related data (e.g., statistical data regarding the sports event) content. The data may be stored in the UE 101, and/or in other devices and/or in a web server. It is contemplated that the content may be related to any type of application, service, or corresponding environment including gaming applications, media applications, productivity applications, location-based applications, social networking applications, and the like. The examples of the application environments applicable to the approach described is not intended to be limiting, and it is contemplated that that the system 100 is applicable to any type of applications or combination of types of applications. In another embodiment, two or more UEs 101a-101n, each having two or more display units, may interact with each other. For example, if two UEs 101a and 101n each create a wall projection display. The user of one device may have the capability to give the control of one or more of the display units of their device to the other device. Furthermore, display units of one device may be utilized as complementary displays to other devices to, for example, presents notes, statistical data or background information regarding the stream on the display unit connected to another device.

In another embodiment, the system 100 enables the user to allow a friend (e.g., a friend on a social network) to control one or more display units accessible to the user's UE 101. In another embodiment, the system 100 enables the user to position two devices close to each other so that a video stream (e.g. a movie) can be played on both display units as a wide screen display or unify two displays to work as a large desktop monitor.

As shown in FIG. 1, the system 100 comprises UEs 101a-101n, wherein the UEs 101a-101n include respective display managers 103a-103n (also collectively referred to as display managers 103) for selecting and presenting content over multiple displays using the approach described herein. The UEs 101 also have connectivity, via a communication network 105, to a display management platform 107, a service platform 109, and content providers 111a-111m. (also collectively referred to as content providers 111). In one embodiment, the display management platform 107 can perform all or some of the functions of the display manager 103 with respect to presenting content on one more displays (e.g., internal displays 113a-113n (also collectively referred to as internal displays 113) and/or external displays 115a-115n (also collectively referred to as external displays 115) of the UEs 101).

In one embodiment, the content is provided by or obtained from the applications 117a-117n (also collectively referred to as applications 117) of the UEs 101, the service platform 109 which includes one or more services 119a-119n (also collectively referred to as services 119) (e.g., music service, mapping service, video service, social networking service, content broadcasting service, etc.), the one or more content providers 111a-111m (e.g., online content retailers, public databases, etc.), or other content sources available or accessible over the communication network 105. In one embodiment, content is delivered from the content providers 111a-111m to the UEs 101 through the service platform 109 and/or the services 119a-119n. For example, a service 119a (e.g., a mapping service) may obtain content (e.g., map content) from a content provider 111a to deliver mapping services to the UE 101.

In one embodiment, the display managers 103 and/or the display management platform 107 include or otherwise have access to information regarding the available internal displays 113 and external displays 115. For example, the information may include specification of each display, various activation methods such as physical transformations or activation through the execution of software and any default processes assigned to the display units based on each activation method. In addition, the display managers 103 and/or the display management platform 107 may receive and store user preferences and user defined default values regarding user's desired applications 117, services 119, editors, websites, and activation methods for each content source. It is noted that some activation methods may have been setup or predefined by the equipment manufacturer, service platform 109, services 119, content providers 111, the user, or a combination thereof.

By way of example, the communication network 105 of system 100 includes one or more networks such as a data network (not shown), a wireless network (not shown), a telephony network (not shown), or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, Personal Digital Assistants (PDAs), audio/video player, digital camera/camcorder, positioning device, television receiver, radio broadcast receiver, electronic book device, game device, or any combination thereof. It is also contemplated that the UE 101 can support any type of interface to the user (such as "wearable" circuitry, etc.). As described previously, the UE 101 may include one or more internal displays 113 and/or external displays 115 to support a multiple monitor configuration. The displays 113 and/or 115 may also be mounted or attached is a sliding mechanism, hinge, or the like so that one or more of the displays can be activated by actuating the mechanism. Also, as previously described, the activation of one or more of the displays may occur by other activation mechanisms (e.g., a button, a software-based trigger, etc.).

By way of example, the UEs 101, and the display management platform 107, the service platform 109, the services 119, and the content providers 111 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application headers (layer 5, layer 6 and layer 7) as defined by the OSI Reference Model.

In one embodiment, the display manager 103 and the corresponding display management platform 107 interact according to a client-server model. It is noted that the client-server model of computer process interaction is widely known and used. According to the client-server model, a client process sends a message including a request to a server process, and the server process responds by providing a service. The server process may also return a message with a response to the client process. Often the client process and server process execute on different computer devices, called hosts, and communicate via a network using one or more protocols for network communications. The term "server" is conventionally used to refer to the process that provides the service, or the host computer on which the process operates. Similarly, the term "client" is conventionally used to refer to the process that makes the request, or the host computer on which the process operates. As used herein, the terms "client" and "server" refer to the processes, rather than the host computers, unless otherwise clear from the context. In addition, the process performed by a server can be broken up to run as multiple processes on multiple hosts (sometimes called tiers) for reasons that include reliability, scalability, and redundancy, among others.

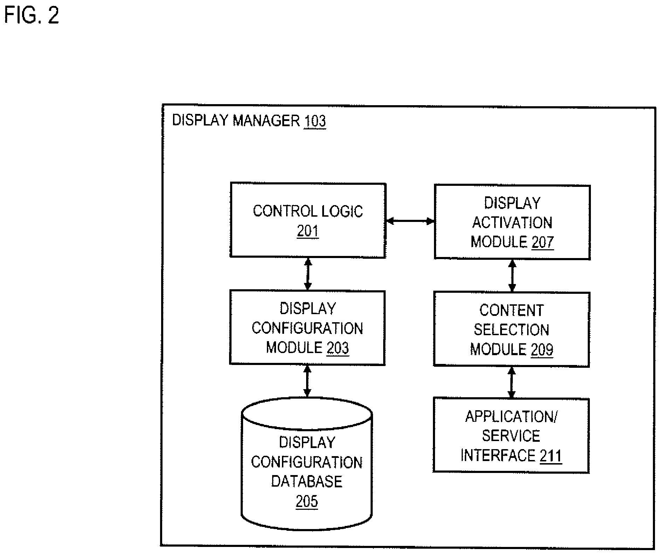

FIG. 2 is a diagram of the components of a display manager, according to one embodiment. By way of example, the display manager 103 includes one or more components for providing content over multiple displays. It is contemplated that the functions of these components may be combined in one or more components or performed by other components of equivalent functionality such as the display management platform 107. In this embodiment, the display manager 103 includes at least: (1) a control logic 201 which executes at least one algorithm for executing functions of the display manager 103; (2) a display configuration module 203 for managing the multiple display configuration of the UE 101; (3) a display configuration database 205 for storing display configuration data, preferences, settings, and the like; (4) a display activation module for detecting the activation of one more displays of a multiple display configuration; (5) a content selection module 209 for determining the content to present on one or more displays of a multiple monitor configuration; and (6) an application/service interface 211 for interacting with applications 117, services 119, and/or content providers 111 to obtain content for presentation on one or more displays 113 and/or 115.

More specifically, the control logic 201 interacts with the display configuration module 203 to determine, for instance, the number of available displays, one or more characteristics of the displays 113 and/or 115 (e.g., display size, resolution, etc.), mechanisms for activating one or more of the displays 113 and/or 115 (e.g., by a physical movement or actuation, a software trigger, a switch, a menu option, etc), and other like configuration information. In one embodiment, the configuration information may be determined by manual input, by retrieval of the information from a configuration file, by detection at the UE 101, and/or like. In one embodiment, the display configuration module 203 may also receive input for specifying combinations of content, applications 117, services 119, etc. that are to be presented on the multiple displays 113 and/or 115. For example, such an input may specify that if a music player is presented on a first display and a second display is activated, the activated second display should present the user interface of an online music store to enable the user to more easily. In addition or alternatively, the combination of content may be specified by rule. For example, a rule may specify that if certain features (e.g., objects, faces, events, etc.) are identified in the content of a first display, content related to the features are presented on second display once the second display is activated. In this way, the content may be dynamically determined based on the content of the first display. In one embodiment, the UE 101 may be associated with more than two displays. In this case, the configuration information may specify the content of subsequently activated displays based on the content in previously activated displays. Once the configuration information is specified, the display configuration module 203 can store the information in the display configuration database 205.

Next, the control logic 201 can direct the display activation module 207 to monitor for activation and/or deactivation of one or more displays 113 and/or 115. By way of example, the display activation module 207 can detect the activation of a display be a physical movement of the displays, physical transformation of the UE 101 associated with the display (e.g., sliding, closing, opening, etc. of a multi-display device), actuation of a switch, as well as other signals or messages for activation of deactivation of a display. Based on the activation of deactivation of the display, the content selection module 209 can select or otherwise determine what content to present on the multiple displays based on content presented in a first one or more of the displays. In one embodiment, the content selection is performed according to the configuration information stored in the display configuration database 205. In addition or alternatively, the content selection module may execute one or more algorithms for dynamically selecting the content once the display activation or deactivation is detected.

To obtain the selected content, the control logic 201 interacts with the application/service interface 211 to request, generate, retrieve, etc. content from one or more of the applications 117, the service platform 109, the services 119, the content providers 111, or a combination thereof. In one embodiment, the application/service interface 211 includes access the content via one or more application programming interfaces (APIs).

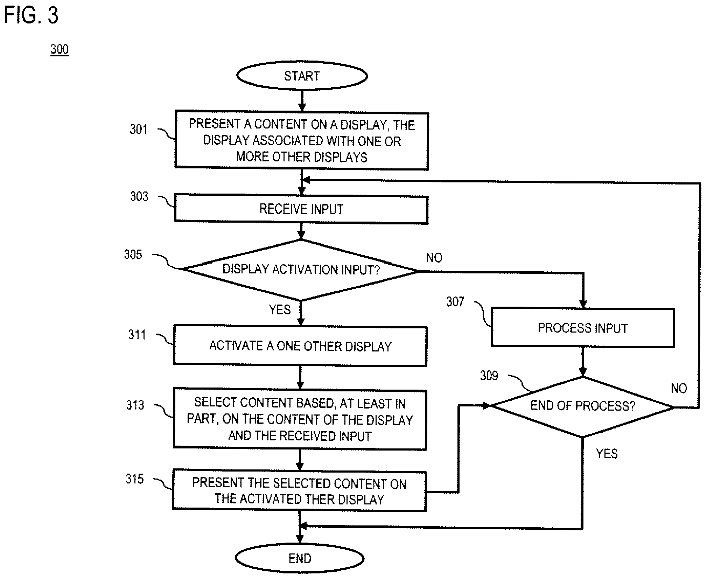

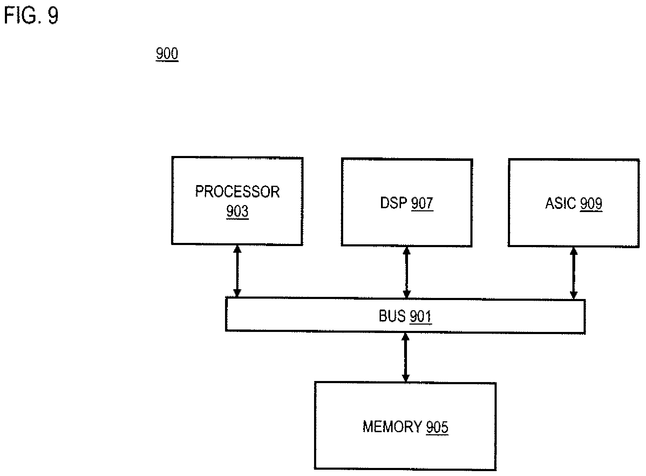

FIG. 3 is a flowchart of a process for providing automated content assignment to multiple displays, according to one embodiment. In one embodiment, the display manager 103 performs the process 300 and is implemented in, for instance, a chip set including a processor and a memory as shown in FIG. 9. In addition or alternatively, the display management platform 107 may perform all or some of the steps of the process 300. In step 301, the display manager 103 causes content to be presented on a first display unit 111a associated with a UE 101a-101n. The content may be displayed through, for instance, an application 117, a service 119, or the like. As described previously, the content may include a dataset from a storage unit (e.g., contact list), an executable code such as a media player (e.g., music player, movie player, slide show, etc.), a text processor, a game interface or a combination of data and executables. In this example, the first display unit 113a is associated with at least another second display unit 113b in a multiple display configuration associated with a common UE 101. Moreover, it is assumed that the second display unit 113b is either deactivated or displaying content that is unrelated to the content of the first display 113a. For simplicity, the embodiments described herein include two internal displays 113a and 113b. However, it is contemplated that the UE 101 may support a multiple display configuration including any number displays supporting one or more internal displays 111, one or more external displays, or any combination thereof.

Next, the display manager 103 receives an input (step 303) for activating the second display unit 113b. By way of example, the input may be signaled by sliding the UE 101 open to reveal the second display 113b, pressing a button on the UE 101, selecting a menu option, or any other physical transformation with respect the UE 101 and/or the displays (e.g., opening the UE 101, twisting the UE 101, etc.). If the input is not related to display activation the normal process of the user input continues as per step 307. The display manager 103 then determines whether there are any other inputs and ends the process accordingly (step 309).

However, if the input specifies display activation, the display manager 103 initiates activation of the second display 113b (step 311). By way of example, activation of the second display 113b may include powering the display, revealing the display to the user, switching a focus to the display, highlighting the display, or the like. Once the second display 113b is activated, the display manager 103 selects the content that is to be presented in the second display 113b based, at least in part, on the content of the first display 113a and the input specifying the activation (step 313).

In one embodiment, as part of the content selection process, the display manager 103 determines whether there are any predefined or default content selection rules. As described previously, these content selection rules may be defined or selected by the service platform 109, application 117, the services 119, content provider 111, service provider, the user, and the like, or any combination thereof. For example the user may have setup a default rule specifying automatic activation of a photo sharing website following taking a photo. In addition or alternatively, the display manager 103 may parse or analyze the content of the first display 113a to determine identifiable characteristics (e.g., events, people, locations, objects, activities, etc.) that might be depicted in the first display 113a and then search for a related application 117, service 119, or content.

In one embodiment, the display manager 103 may select new content for both the first display 113a and the second display 113b based on the original content of the first display 113a. For example, if the first display 113a was originally presenting a music player application, activation of the second screen may cause the display manager 103 to replace the content of the first display 113a with a slide show application of images of the playing artist, while at the same time causing the selection of an online music store user interface for the second display 113b. The display manager 103 then causes, at least in part, presentation of the selected content in the second display 113b (step 315). In certain embodiments, on deactivation of the second display 113b, the display manager 103 restores the original content (e.g., the music player application) of the first display 113a.

In another embodiment, the display manager 103 may select additional or alternate content for the second display 113b by receiving additional activation signals. For example, if the second display 113b is already activated and presenting a first set of selected content, a subject activity signal of the display causes the display manager 103 to select another set of content for presentation in the second display 113b. In this way the user can advantageously cycle through different selected content in the second display 113b. In such cases, the display manager 103 may keep a history of active content for each display unit and cycle through the history on, for instance, receipt of subsequent activation signals.

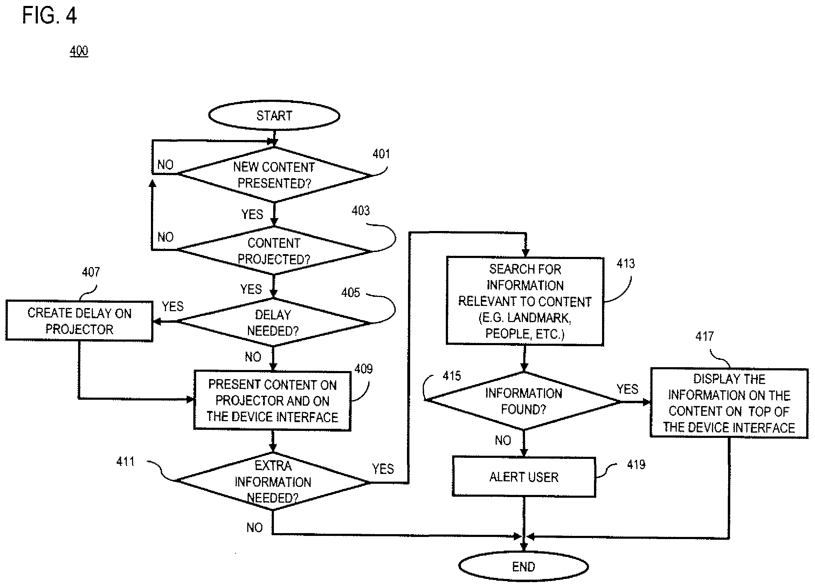

FIG. 4 is a flowchart of process for interacting with content over multiple displays, according to one embodiment. In one embodiment, the display manager 103 performs the process 400 and is implemented in, for instance, a chip set including a processor and a memory as shown in FIG. 9. In addition or alternatively, the display management platform 107 may perform all or some of the steps of the process 400. In the example of FIG. 4, it is assumed that a user of a UE 101a-101n is presenting a set of content on a projected display while also viewing selected or related content on another display. It is noted that although the examples of FIG. 4 is described in the context of a projected display and first display, it is contemplated that any one or more second displays can be used in place of the projected display. Per step 401, the display manager 103 determines whether new content is being presented on, for instance, a first screen of the UE 101. If a new presentation appears, the display manager 103 determines per step 403 whether the user wishes to project the presented content on another display. For example, the user may choose to present all of some content only on the first display, to use them as a reference, while limiting the projected content to related content or a subset of the content on the first display. For example, content on the first display can remain private or specific to the user while the related content on the projected can be viewed be a wider audience.

In one embodiment, the display manager 103 determines how content is to be presented on the displays of the UE 101 (e.g., the first display and the projected display discussed above) based, at least in part, on the nature or characteristics of the content itself. In this case, the user may generate an input identifying how the content is to be projected or presented on the multiple display configuration. For example, if the content includes media content (e.g., video), in step 405, the display manager 103 determines whether a delay or other independent playback control (e.g., fast forward, rewind, pause, skip, etc.) between the content presented in the first display and the content or a version of the content in the projected display. For example, a delay or other independent playback of video content can be used to enable the user to preview or find portions of a video on the first screen before that portion of the video is presented in the projected screen. In this way, the user can anticipate and/or prepare remarks about the upcoming video segment.

By way of example, it is contemplated that the display manager 103 may receive an input from the user may input for specifying the delay period or the need to independently control the content. As per step 407, the display manager 103 can then create the delay or provide the independent playback controls by, for instance, selecting one or more media applications that enable such controls for presentation in the multiple displays (step 409).

In yet another embodiment, the user may request or specify additional information about the content in the projected display. This additional information can then be presented privately to the user on the first display. For example, in step 411, the display manager 103 determines whether the user has requested extra information related to the content. For example, user may specify the request for extra information by pointing and clicking on an object (e.g. a landmark, a vehicle, a store, etc.) or on a person's face on their private display. The display manager 103 may then relay the request to an application 117, service 119, service platform 109, and the like to complete the request depending on the specific information requested. For example, if the user requests information about an object, event, etc. presented in the projected display, the display manager 103 can interface with a search engine to retrieve additional information about requested subject (step 413). If the user requests information about a person, the display manager 103 can similarly interface with a social networking site to retrieve, for instance, profile information, status information, and the like. If the information is found (step 415), the display manager 103 may present the results on the first display for viewing by the user independently of the projected display (step 417). In one embodiment, the retrieval and/or retrieval of the information can be triggered by activating the private screen. Otherwise, a message may appear on one of the displays indicating that the information was not found (step 419). In one embodiment, the search and content selection process for the first display is hidden from the audience of the projected display.

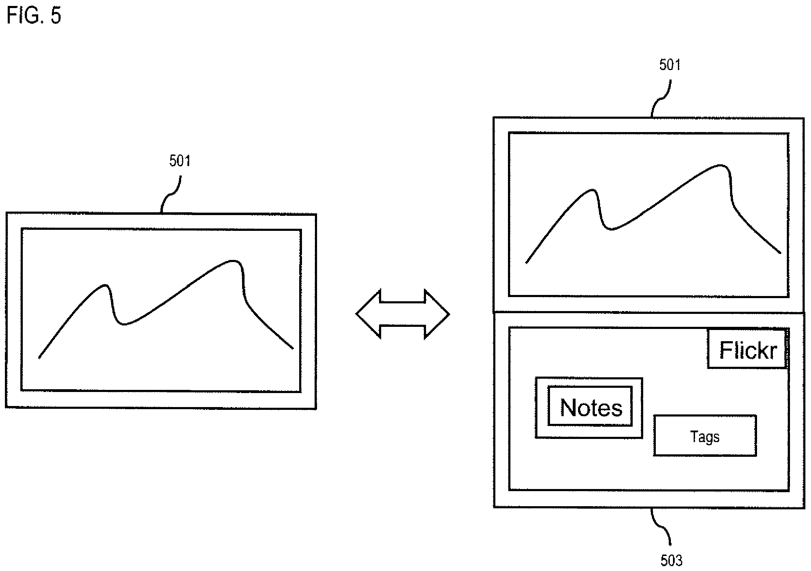

FIG. 5 is a diagram of a user interface utilized in the processes of FIG. 3, according to one embodiment. In the example, of FIG. 5 user interfaces of a dual screen UE 101 that is capable of performing the approach of system 100 are described. In one embodiment the displays of the UE 101 may be mounted on a sliding mechanism that is able to open and close to either reveal or hide a one of the two built-in displays. There are various other mechanisms, such as swivel mechanism or a hinge mechanism, that can be used to reveal or hide other displays. As shown, a first display 501 presents a user interface for a camera application 117 for controlling an embedded camera module of the UE 101. The display 501 depicts an example photograph that has been captured using the camera application 117. The camera application 117 user interface is displayed, for instance, when the user presses or actuates a camera shutter button to initiate capturing a photograph.

After capturing the picture, the user can activate the second display 503 by sliding the first display 501 up to reveal the second display 503. On detecting the sliding action and subsequent activation of the second display 503, the display manager 503 of the UE 101 can automatically select content that is to be presented in the second display 503 based on the content of the first display 501 (e.g., the captured photograph). In this case, the display manager 503 selects content comprising the user interface for a photo-sharing application 117 (e.g., Flickr®). In this way, the display manager 103 enables the user to quickly access applications and services related to the content of the first display 501 without specific interaction between the respective applications (e.g., the camera application 117 and the photo-sharing application 117). After uploading the picture using the Flickr® user interface in the second display 503, the user can deactivate the second display 503 by closing the sliding mechanism. On the deactivation of the second display 503, the display manager 103 maintains the camera application 117 in the first display 501 so that the user can continue to use the camera.

In certain embodiments, activation of the second display 503 can trigger the selection and presentation of related content in both the first display 501 and the second display 503. In other words, related applications 117 or services 119 may be shown both screens. For example, a photo-editor can replace the camera application 117 in the first display 501 while the photo-sharing interface is presented in the second display 503 as before. On closing or deactivating the second display 503, the display manager 103 can then restore the original camera application 117 to the first display 501. It is noted that in this example, the user may specify the default content selection behavior (e.g., via rules) that define what content, applications 117, or services 119 appear when the second display 503 is activated.

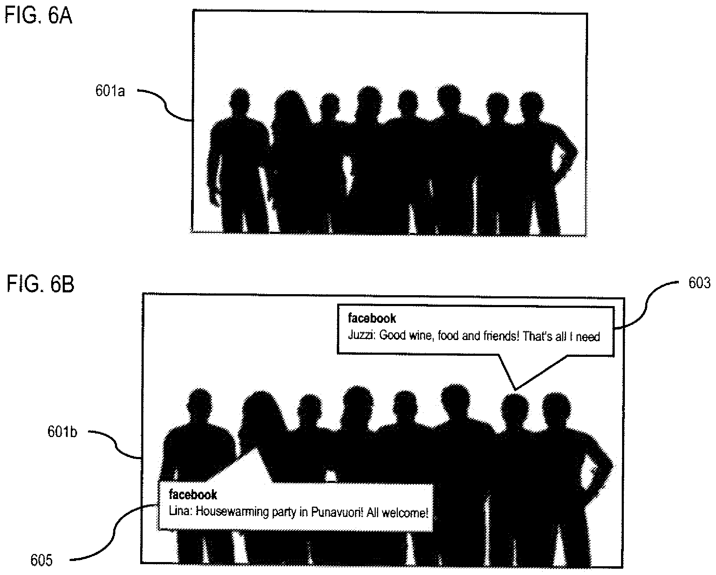

FIGs. 6A-6B are diagrams of user interfaces utilized in the processes of FIG. 4, according to various embodiments. The display 601a in FIG. 6A depicts content (e.g., a live video feed of a group of people) presented on a public projected display. For example, the presenter may be introducing new group members to the existing members of the group. Display 601b of FIG. 6B is the content that is presented on the presenter's private display. As shown in display 601b, the presenter may have searched for the people in the live video feed in the social networking site Facebook®. In one embodiment, the presenter may previously setup the UE 101 so that the search process is done automatically in the background without the presenter having to activate the search every time. As shown, this search has found results for two of the people in the picture and their status lines 603 and 605 are presented on the private display. Depending on the presenters' requirements, other types of information (e.g. geographical, scientific, statistical, historical, etc.) could be shown on the display.

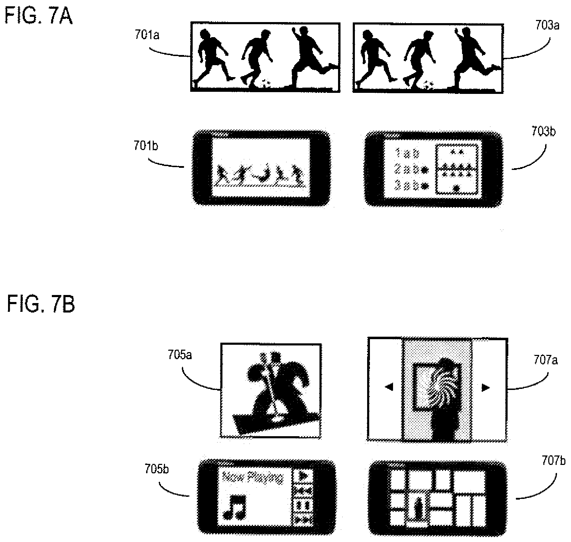

FIGs. 7A-7F are diagrams of user interfaces utilized in the processes of FIGs. 3 and 4, according to various embodiments. FIG. 7A depicts examples where the presented content is a live event. Displays 701a and 701b show a case where the user is allowed to interact with the presentation of a live event. As seen in FIG. 7A the user may watch replays on demand on the projected display 701a while still keeping track of the live game on another display 701b. In another embodiment, user may watch the replay or the live feed on the projected display 703a, while interacting with match status and data on another display 703b.

FIG. 7B depicts examples where the presented content is a music video or a photo album. As seen in FIG. 7B, a music video is presented on the projected display 705a, while another display 705b shows information about the music track that is being played. Additionally, photo thumbnails can be displayed on one display 707b while a larger image is being projected on the display 707a and the user is able to select the photo to be projected.

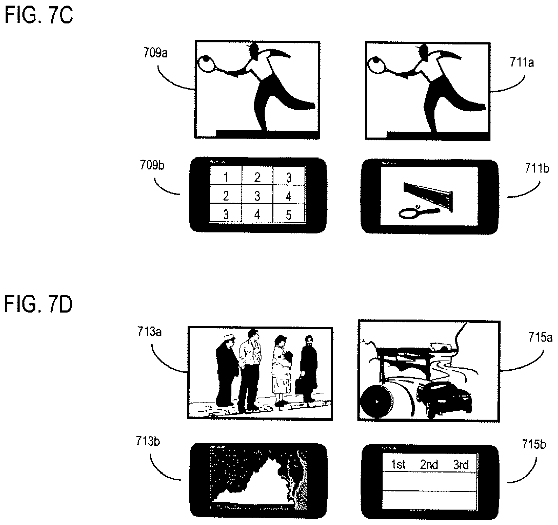

FIG. 7C depicts examples where the presented content is a digital broadcast. A tennis match is played on projected display 709a while a live feed of the match scores is presented on another display 709b. Additionally, with digital services provided, user may choose to watch two games at the same time, one on the projected display 711a and one on the other display 711b. Alternatively if the projected image is too large, it can be split into many parts to allow the user a view of all matches at once.

FIG. 7D depicts examples where the presented content is related to a game. In FIG. 7D the game screen is presented on the projected display 713a, while the display 713b displays an interactive map related to the game. Additionally, the game can be presented on display 715a while the display 715b shows game options setup screen. Furthermore, the game route may be navigated on a corner of a display.

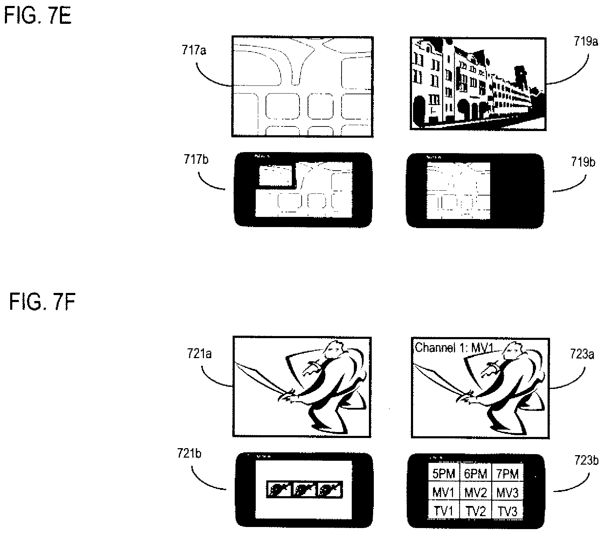

FIG. 7E depicts examples where the presented content is related to a navigation system. In FIG. 7E the display 717b that may be the UE display, presents a large map of a city while the projected display 717a presents a zoomed-in highlight of the map of display 717b. In display 719a the projected display may show an actual street view which the user can navigate using a dedicated touch pad, while the other display 719b can show the aerial view.

FIG. 7F depicts examples where the presented content is a movie. In FIG. 7F, the user may watch a movie on the projected display 721a, while getting information or statistics about the movie or other topics on the other display 721b. Similarly, the user may watch TV on the display 723a while do several multitasking activities on another display 723a, for example seeing a program guide on the other display 723b.

It is noted that in the examples of FIG. 7, the UE displays, projected displays, or any other types of displays may be used in combination with each other or interchangeably.

The processes described herein for providing automated content assignment to multiple displays may be advantageously implemented via software, hardware, firmware or a combination of software and/or firmware and/or hardware. For example, the processes described herein, including for providing user interface navigation information associated with the availability of services, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

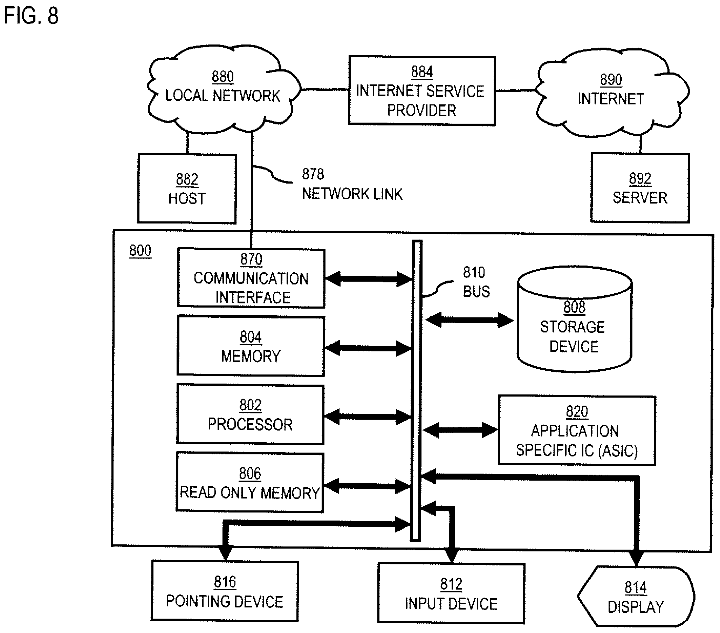

FIG. 8 illustrates a computer system 800 upon which an embodiment of the invention may be implemented. Although computer system 800 is depicted with respect to a particular device or equipment, it is contemplated that other devices or equipment (e.g., network elements, servers, etc.) within FIG. 8 can deploy the illustrated hardware and components of system 800. Computer system 800 is programmed (e.g., via computer program code or instructions) to provide automated content assignment to multiple displays as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 800, or a portion thereof, constitutes a means for performing one or more steps of providing automated content assignment to multiple displays.

A bus 810 includes one or more parallel conductors of information so that information is transferred quickly among devices coupled to the bus 810. One or more processors 802 for processing information are coupled with the bus 810.

A processor (or multiple processors) 802 performs a set of operations on information as specified by computer program code related to providing automated content assignment to multiple displays. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or other dynamic storage device, stores information including processor instructions for providing automated content assignment to multiple displays. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for providing automated content assignment to multiple displays, is provided to the bus 810 for use by the processor from an external input device 812, such as a keyboard containing alphanumeric keys operated by a human user, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT) or a liquid crystal display (LCD), or plasma screen or printer for presenting text or images, or an autostereoscopic display capable of showing real 3D content, and a pointing device 816, such as a mouse or a trackball or cursor direction keys, or motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of application specific ICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network 105 for providing automated content assignment to multiple displays to the UE 101.

The term "computer-readable medium" as used herein refers to any medium that participates in providing information to processor 802, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 808. Volatile media include, for example, dynamic memory 804. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 820.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communication network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of system 800 can be deployed in various configurations within other computer systems, e.g., host 882 and server 892.

At least some embodiments of the invention are related to the use of computer system 800 for implementing some or all of the techniques described herein. According to one embodiment of the invention, those techniques are performed by computer system 800 in response to processor 802 executing one or more sequences of one or more processor instructions contained in memory 804. Such instructions, also called computer instructions, software and program code, may be read into memory 804 from another computer-readable medium such as storage device 808 or network link 878. Execution of the sequences of instructions contained in memory 804 causes processor 802 to perform one or more of the method steps described herein. In alternative embodiments, hardware, such as ASIC 820, may be used in place of or in combination with software to implement the invention. Thus, embodiments of the invention are not limited to any specific combination of hardware and software, unless otherwise explicitly stated herein.

The signals transmitted over network link 878 and other networks through communications interface 870, carry information to and from computer system 800. Computer system 800 can send and receive information, including program code, through the networks 880, 890 among others, through network link 878 and communications interface 870. In an example using the Internet 890, a server host 892 transmits program code for a particular application, requested by a message sent from computer 800, through Internet 890, ISP equipment 884, local network 880 and communications interface 870. The received code may be executed by processor 802 as it is received, or may be stored in memory 804 or in storage device 808 or other non-volatile storage for later execution, or both. In this manner, computer system 800 may obtain application program code in the form of signals on a carrier wave.

Various forms of computer readable media may be involved in carrying one or more sequence of instructions or data or both to processor 802 for execution. For example, instructions and data may initially be carried on a magnetic disk of a remote computer such as host 882. The remote computer loads the instructions and data into its dynamic memory and sends the instructions and data over a telephone line using a modem. A modem local to the computer system 800 receives the instructions and data on a telephone line and uses an infra-red transmitter to convert the instructions and data to a signal on an infra-red carrier wave serving as the network link 878. An infrared detector serving as communications interface 870 receives the instructions and data carried in the infrared signal and places information representing the instructions and data onto bus 810. Bus 810 carries the information to memory 804 from which processor 802 retrieves and executes the instructions using some of the data sent with the instructions. The instructions and data received in memory 804 may optionally be stored on storage device 808, either before or after execution by the processor 802.

FIG. 9 illustrates a chip set or chip 900 upon which an embodiment of the invention may be implemented. Chip set 900 is programmed to provide automated content assignment to multiple displays as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 900 can be implemented in a single chip. It is further contemplated that in certain embodiments the chip set or chip 900 can be implemented as a single "system on a chip." It is further contemplated that in certain embodiments a separate ASIC would not be used, for example, and that all relevant functions as disclosed herein would be performed by a processor or processors. Chip set or chip 900, or a portion thereof, constitutes a means for performing one or more steps of providing user interface navigation information associated with the availability of services. Chip set or chip 900, or a portion thereof, constitutes a means for performing one or more steps of providing automated content assignment to multiple displays.

In one embodiment, the chip set or chip 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a more general purpose processor. Other specialized components to aid in performing the inventive functions described herein may include one or more field programmable gate arrays (FPGA) (not shown), one or more controllers (not shown), or one or more other special-purpose computer chips.

In one embodiment, the chip set or chip 800 includes merely one or more processors and some software and/or firmware supporting and/or relating to and/or for the one or more processors.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide automated content assignment to multiple displays. The memory 905 also stores the data associated with or generated by the execution of the inventive steps.

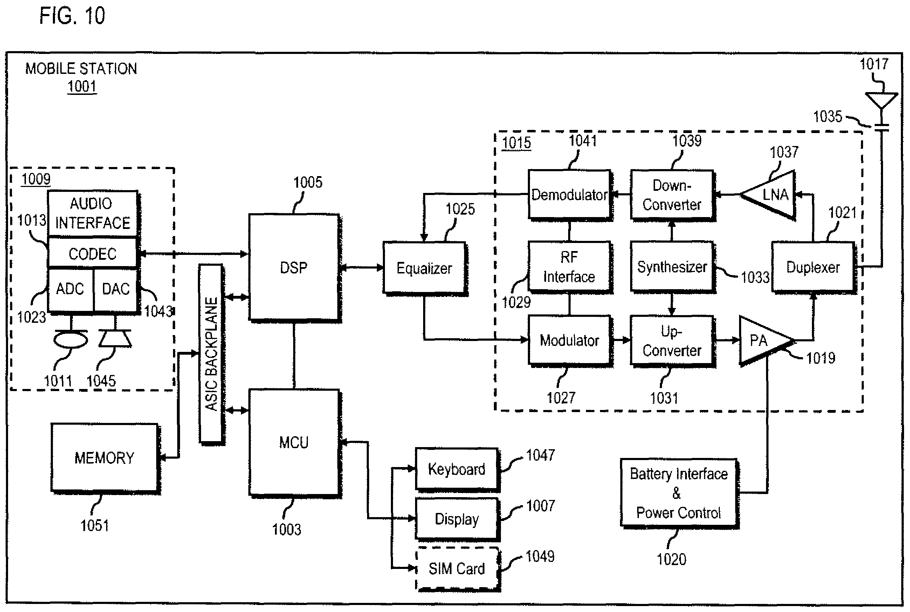

FIG. 10 is a diagram of exemplary components of a mobile terminal (e.g., handset) for communications, which is capable of operating in the system of FIG. 1, according to one embodiment. In some embodiments, mobile terminal 1000, or a portion thereof, constitutes a means for performing one or more steps of providing automated content assignment to multiple displays. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile terminal functions that perform or support the steps of providing automated content assignment to multiple displays. The display 10 includes display circuitry configured to display at least a portion of a user interface of the mobile terminal (e.g., mobile telephone). Additionally, the display 1007 and display circuitry are configured to facilitate user control of at least some functions of the mobile terminal. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile terminal 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile terminal 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003-which can be implemented as a Central Processing Unit (CPU) (not shown).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile terminal 1001 to provide automated content assignment to multiple displays. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the terminal. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile terminal 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable storage medium known in the art. The memory device 1051 may be, but not limited to, a single memory, CD, DVD, ROM, RAM, EEPROM, optical storage, or any other non-volatile storage medium capable of storing digital data.

An optionally incorporated SIM card 1049 carries, for instance, important information, such as the cellular phone number, the carrier supplying service, subscription details, and security information. The SIM card 1049 serves primarily to identify the mobile terminal 1001 on a radio network. The card 1049 also contains a memory for storing a personal telephone number registry, text messages, and user specific mobile terminal settings.

## Claims

1. A method (300) comprising:
causing (301), at least in part, to present a first content on a first display (113a);
receiving (303) an input for activating (311) one or more second displays (113b);
causing, at least in part, to automatically select (313) a second content based, at least in part, on the first content and the input specifying activation of said one or more second displays; and
causing, at least in part, to present the second content on the one or more second displays, wherein selection of the second content is based on parsing or analyzing content of the first display to determine identifiable characteristics in the first content, said identifiable characteristics used to search for and identify at least one of a related application, service or content for display on at least one or more second displays.

2. A method of claim 1, further comprising:
causing, at least in part, to select a third content based, at least in part, on the first content and the input; and
causing, at least in part, to present the third content in the first display, wherein the third content replaces the first content.

3. A method of claim 2, further comprising:
receiving another input for deactivating the one or more second displays;
causing, at least in part, to deactivate the one or more second displays; and
causing, at least in part, to present the first content in the first display, wherein the first content replaces the third content.

4. A method according to any one of claim 1 to 3, wherein the causing, at least in part, to select the second content comprises:
causing, at least in part, to select an application, a service, web content, or a combination thereof associated with the first content,
wherein the second content includes a user interface presenting the selected application, service, web content, or combination thereof.

5. A method according to any one of claim 1 to 4, wherein the input is a physical action resulting in movement of the first display with respect to the second display.

6. A method according to any one of claim 1 to 5, wherein the first content is multimedia content and the second content is the same multimedia content, related multimedia content, or a combination thereof, and further comprising:
causing, at least in part, to present independent playback controls for the first display, the one or more second displays, or a combination thereof.

7. A method according to any one of claim 1 to 6, wherein the first display and the one or more second displays are provided in a device configured to include a projector, and wherein the first display is a projected screen of the projector and at least one of the second displays is a display screen of the device.

8. A method according to any one of claim 1 to 7, wherein the first display and the one or more second displays are touch-enabled, and wherein the first display and the one or more second displays are configured so that at least one of the first display and the one or more second displays is visible.

9. An apparatus (101a, 100n) comprising:
at least one processor (903); and
at least one memory (905) including computer program code for one or more programs,
the at least one memory and the computer program code configured to, with the at least one processor, cause the apparatus to perform at least the following:
cause, at least in part, to present a first content on a first display (113a);
receive (303) an input for activating (311) one or more second displays (113b);
cause, at least in part, to automatically select a second content based, at least in part, on the first content and the input; and
cause, at least in part, to present the second content on the one or more second displays, wherein selection of the second content is based on parsing or analyzing content of the first display to determine identifiable characteristics in the first content, said identifiable characteristics used to search for and identify at least one of a related application, service or content for display on at least one or more second displays.

10. An apparatus according to claim 9, wherein the apparatus is further caused to:
select a third content based, at least in part, on the first content and the input; and
cause, at least in part, to present the third content in the first display, wherein the third content replaces the first content.

11. An apparatus according to claim 10, wherein the apparatus is further caused to:
receive another input for deactivating the one or more second displays;
cause, at least in part, to deactivate the one or more second displays; and
cause, at least in part, to present the first content in the first display, wherein the first content replaces the third content.

12. An apparatus according to any one of claims 9 to 11, wherein the apparatus is further caused to select an application, a service, web content, or a combination thereof associated with the first content,
wherein the second content includes a user interface presenting the selected application, service, web content, or combination thereof.

13. An apparatus according to any one of claims 9 to 12, wherein the input is a physical action resulting in movement of the first display with respect to the second display.

14. An apparatus according to any one of claims 9 to 13, wherein the first content is multimedia content and the second content is the same multimedia content, related multimedia content, or a combination thereof, and wherein the apparatus is further caused to:
cause, at least in part, to present independent playback controls for the first display, the one or more second displays, or a combination thereof.

15. An apparatus according to any one of claims 9 to 14, wherein the first display and the one or more second displays are provided in the apparatus, wherein the apparatus configured to include a projector, and wherein the first display is a projected screen of the projector and at least one of the second displays is a display screen of the device.

16. An apparatus according to any one of claims 9 to 15, wherein the first display and the one or more second displays are touch-enabled, and wherein the first display and the one or more second displays are mounted configured so that at least one of the first display and the one or more second displays is visible.

17. A computer program product comprising computer code instructions, when executed by one or more processors, cause an apparatus to perform at least the method of any of claims 1 to 8.

## Patentansprüche

1. Verfahren (300), das folgende Schritte umfasst:
- Veranlassen (301), einen ersten Inhalt zumindest teilweise auf einer ersten Anzeige (113a) darzustellen;
- Empfangen (303) einer Eingabe zum Aktivieren (311) von einer oder mehreren zweiten Anzeigen (113b);
- Veranlassen, einen zweiten Inhalt zumindest teilweise automatisch auszuwählen (313), basierend auf, zumindest teilweise, dem ersten Inhalt und der Eingabe, die das Aktivieren von der einen oder den mehreren zweiten Anzeigen vorgibt; und
- Veranlassen, den zweiten Inhalt zumindest teilweise auf der einen oder den mehreren zweiten Anzeigen darzustellen,
wobei die Auswahl des zweiten Inhalts auf dem Aufgliedern oder dem Analysieren des Inhalts der ersten Anzeige basiert, um identifizierbare Merkmale in dem ersten Inhalt zu bestimmen, wobei die identifizierbaren Merkmale verwendet werden, um zumindest eine der folgenden Komponenten zu identifizieren: eine zugehörige Anwendung, einen Dienst oder einen Inhalt zum Anzeigen auf mindestens einer oder mehreren von zweiten Anzeigen.

2. Verfahren nach Anspruch 1, das ferner folgende Schritte umfasst:
- Veranlassen, zumindest teilweise, einen dritten Inhalt zumindest teilweise basierend auf dem ersten Inhalt und der Eingabe auszuwählen; und
- Veranlassen, den dritten Inhalt zumindest teilweise in der ersten Anzeige darzustellen, wobei der dritte Inhalt den ersten Inhalt ersetzt.

3. Verfahren nach Anspruch 2, das ferner folgende Schritte umfasst:
- Empfangen einer weiteren Eingabe zum Deaktivieren von der einen oder den mehreren zweiten Anzeigen;
- Veranlassen, die eine oder mehreren zweiten Anzeigen zumindest teilweise zu deaktivieren; und
- Veranlassen, den ersten Inhalt zumindest teilweise in der ersten Anzeige darzustellen, wobei der erste Inhalt den dritten Inhalt ersetzt.

4. Verfahren nach einem der Ansprüche 1 bis 3,
wobei das Veranlassen, zumindest teilweise, den zweiten Inhalt auszuwählen, Folgendes umfasst:
- Veranlassen, zumindest teilweise, eine Anwendung, einen Dienst, einen Web-Inhalt oder eine Kombination davon auszuwählen, die oder der dem ersten Inhalt zugeordnet ist,
wobei der zweite Inhalt eine Benutzerschnittstelle enthält, die die ausgewählte Anwendung, den ausgewählten Dienst, den ausgewählten Web-Inhalt oder eine Kombination davon anzeigt.

5. Verfahren nach einem der Ansprüche 1 bis 4,
wobei die Eingabe eine physikalische Handlung ist, die zu einer Bewegung der ersten Anzeige in Bezug auf die zweite Anzeige führt.

6. Verfahren nach einem der Ansprüche 1 bis 5,
wobei der erste Inhalt ein Multimedia-Inhalt ist und der zweite Inhalt der gleiche Multimedia-Inhalt, ein ähnlicher Multimedia-Inhalt oder eine Kombination davon ist, und ferner folgende Schritte umfasst:
- Veranlassen, zumindest teilweise, unabhängige Wiedergabesteuerungen für die erste Anzeige, die eine oder mehrere von zweiten Anzeigen oder eine Kombination davon anzuzeigen.

7. Verfahren nach einem der Ansprüche 1 bis 6,
wobei die erste Anzeige und die eine oder mehreren zweiten Anzeigen in einer Vorrichtung untergebracht sind, die derart konfiguriert ist, dass sie einen Projektor aufweist, und
wobei die erste Anzeige ein projizierter Bildschirm des Projektors ist und mindestens eine der zweiten Anzeigen ein Bildschirm der Vorrichtung ist.

8. Verfahren nach einem der Ansprüche 1 bis 7,
wobei die erste Anzeige und die eine oder mehreren zweiten Anzeigen Touch-fähig sind und
wobei die erste Anzeige und die eine oder mehreren zweiten Anzeigen derart konfiguriert sind, dass mindestens eine von der ersten Anzeige und der einen oder mehreren zweiten Anzeigen sichtbar ist.

9. Vorrichtung (101a, 100n), die Folgendes aufweist:
- mindestens einen Prozessor (903); und
- mindestens einen Speicher (905) mit Computerprogrammcode für ein oder mehrere Programme,
wobei der mindestens eine Speicher und der Computerprogrammcode derart konfiguriert sind, dass sie zusammen mit dem mindestens einen Prozessor bewirken, dass die Vorrichtung zumindest Folgendes ausführt:
∘ Veranlassen, einen ersten Inhalt zumindest teilweise auf einer ersten Anzeige (113a) darzustellen;
∘ Empfangen (303) einer Eingabe zum Aktivieren (311) von einer oder mehreren zweiten Anzeigen (113b);
∘ Veranlassen, einen zweiten Inhalt zumindest teilweise automatisch auszuwählen, der zumindest teilweise auf dem ersten Inhalt und der Eingabe basiert; und
∘ Veranlassen, den zweiten Inhalt zumindest teilweise auf der einen oder den mehreren zweiten Anzeigen darzustellen,
wobei die Auswahl des zweiten Inhalts auf dem Aufgliedern oder dem Analysieren des Inhalts der ersten Anzeige basiert, um identifizierbare Merkmale in dem ersten Inhalt zu bestimmen, wobei die identifizierbaren Merkmale verwendet werden, um zumindest eine der folgenden Komponenten zu identifizieren: eine zugehörige Anwendung, einen Dienst oder einen Inhalt zum Anzeigen auf mindestens einer oder mehreren von zweiten Anzeigen.

10. Vorrichtung nach Anspruch 9,
wobei die Vorrichtung ferner zu Folgendem veranlasst wird:
- Auswählen eines dritten Inhalts, der zumindest teilweise auf dem ersten Inhalt und der Eingabe basiert; und
- Veranlassen, den dritten Inhalt zumindest teilweise auf der ersten Anzeige darzustellen, wobei der dritte Inhalt den ersten Inhalt ersetzt.

11. Vorrichtung nach Anspruch 10,
wobei die Vorrichtung ferner zu Folgendem veranlasst wird:
- Empfangen einer weiteren Eingabe zum Deaktivieren von der einen oder den mehreren zweiten Anzeigen;
- Veranlassen, die eine oder die mehreren zweiten Anzeigen zumindest teilweise zu deaktivieren; und
- Veranlassen, den ersten Inhalt zumindest teilweise in der ersten Anzeige darzustellen, wobei der erste Inhalt den dritten Inhalt ersetzt.

12. Vorrichtung nach einem der Ansprüche 9 bis 11,
wobei die Vorrichtung ferner dazu veranlasst wird, eine Anwendung, einen Dienst, einen Web-Inhalt oder eine Kombination davon auszuwählen, die oder der dem ersten Inhalt zugeordnet ist,
wobei der zweite Inhalt eine Benutzerschnittstelle enthält, die die ausgewählte Anwendung, den ausgewählten Dienst, den ausgewählten Web-Inhalt oder eine Kombination davon anzeigt.

13. Vorrichtung nach einem der Ansprüche 9 bis 12,
wobei die Eingabe eine physikalische Handlung ist, die zu einer Bewegung der ersten Anzeige in Bezug auf die zweite Anzeige führt.

14. Vorrichtung nach einem der Ansprüche 9 bis 13,
wobei der erste Inhalt ein Multimedia-Inhalt ist und der zweite Inhalt der gleiche Multimedia-Inhalt, ein ähnlicher Multimedia-Inhalt oder eine Kombination davon ist, und
wobei die Vorrichtung ferner dazu veranlasst wird, zu veranlassen, dass unabhängige Wiedergabesteuerungen zumindest teilweise für die erste Anzeige, die eine oder mehrere der zweite Anzeigen oder eine Kombination davon anzuzeigen.

15. Vorrichtung nach einem der Ansprüche 9 bis 14,
wobei die erste Anzeige und die eine oder die mehreren zweiten Anzeigen in der Vorrichtung untergebracht sind,
wobei die Vorrichtung derart konfiguriert ist, dass sie einen Projektor aufweist, und
wobei die erste Anzeige ein projizierter Bildschirm des Projektors ist und mindestens eine der zweiten Anzeigen ein Bildschirm der Vorrichtung ist.

16. Vorrichtung nach einem der Ansprüche 9 bis 15,
wobei die erste Anzeige und die eine oder die mehreren zweiten Anzeigen Touch-fähig sind und
wobei die erste Anzeige und die eine oder mehreren zweiten Anzeigen derart angebracht und konfiguriert sind, dass mindestens eine von der ersten Anzeige und der einen oder den mehreren zweiten Anzeigen sichtbar ist.

17. Computerprogrammprodukt, das Computercodeanweisungen umfasst, die dann, wenn sie von einem oder mehreren Prozessoren ausgeführt werden, bewirken, dass eine Vorrichtung zumindest das Verfahren gemäß einem der Ansprüche 1 bis 8 ausführt.

## Revendications

1. Procédé (300) comprenant :
la mise en œuvre (301), au moins pour partie, d'une présentation d'un premier contenu sur un premier affichage (113a) ;
la réception (303) d'une entrée pour l'activation (311) d'un ou plusieurs deuxièmes affichages(113b) ;
la mise en œuvre, au moins pour partie, d'une sélection automatique (313) d'un deuxième contenu sur la base, au moins pour partie, du premier contenu et de l'entrée précisant l'activation desdits un ou plusieurs deuxièmes affichages ; et
la mise en œuvre, au moins pour partie, d'une présentation du deuxième contenu sur le ou les plusieurs deuxièmes affichages, selon lequel la sélection du deuxième contenu est basée sur le traitement ou l'analyse du contenu du premier affichage afin de déterminer des caractéristiques identifiables dans le premier contenu, lesdites caractéristiques identifiables étant utilisées pour rechercher et identifier au moins un élément parmi une application liée, un service lié ou un contenu lié pour un affichage sur au moins l'un des un ou plusieurs deuxièmes affichages.

2. Procédé selon la revendication 1, comprenant en outre :
la mise en œuvre, au moins pour partie, d'une sélection d'un troisième contenu sur la base, au moins pour partie, du premier contenu et de l'entrée ; et
la mise en œuvre, au moins pour partie, d'une présentation du troisième contenu dans le premier affichage, selon lequel le troisième contenu remplace le premier contenu.

3. Procédé selon la revendication 2, comprenant en outre :
la réception d'une autre entrée pour la désactivation de l'un ou des plusieurs deuxièmes affichages ;
la mise en œuvre, au moins pour partie, de la désactivation de l'un ou des plusieurs deuxièmes affichages ; et
la mise en œuvre, au moins pour partie, d'une présentation du premier contenu dans le premier affichage, selon lequel le premier contenu remplace le troisième contenu.

4. Procédé selon l'une quelconque des revendications 1 à 3, selon lequel la mise en œuvre, au moins pour partie, de la sélection du deuxième contenu comprend :
la mise en œuvre, au moins pour partie, d'une sélection d'une application, d'un service, d'un contenu internet, ou d'une combinaison de ceux-ci associée au premier contenu ;
selon lequel le deuxième contenu comporte une interface utilisateur présentant l'application sélectionnée, le service sélectionné, le contenu internet sélectionné, ou une combinaison de ceux-ci.

5. Procédé selon l'une quelconque des revendications 1 à 4, selon lequel l'entrée est une action physique provoquant un mouvement du premier affichage par rapport au deuxième affichage.

6. Procédé selon l'une quelconque des revendications 1 à 5, selon lequel le premier contenu est du contenu multimédia et le deuxième contenu est le même contenu multimédia, du contenu multimédia lié, ou une combinaison de ceux-ci, et comprenant en outre :
la mise en œuvre, au moins pour partie, d'une présentation de commandes de lecture indépendantes pour le premier affichage, le ou les plusieurs deuxièmes affichages, ou une combinaison de ceux-ci.

7. Procédé selon l'une quelconque des revendications 1 à 6, selon lequel le premier affichage et le ou les plusieurs deuxièmes affichages sont fournis dans un dispositif configuré pour comporter un projecteur, et selon lequel le premier affichage est un écran projeté du projecteur et au moins l'un des deuxièmes affichages est un écran d'affichage du dispositif.

8. Procédé selon l'une quelconque des revendications 1 à 7, selon lequel le premier affichage et le ou les plusieurs deuxièmes affichages sont sensibles au toucher, et selon lequel le premier affichage et le ou les plusieurs deuxièmes affichages sont configurés de sorte que au moins l'un parmi le premier affichage et le ou les plusieurs deuxièmes affichages est visible.

9. Équipement (101a, 100n) comprenant :
au moins un processeur (903) ; et
au moins une mémoire (905) comportant du code de programmation d'ordinateur pour un ou plusieurs programmes ;
la au moins une mémoire et le code de programmation d'ordinateur étant configurés pour, à l'aide du au moins un processeur, faire fonctionner l'équipement de manière à effectuer au moins les opérations suivantes :
la mise en œuvre, au moins pour partie, d'une présentation d'un premier contenu sur un premier affichage (113a) ;
la réception (303) d'une entrée pour l'activation (311) d'un ou plusieurs deuxièmes affichages(113b) ;
la mise en œuvre, au moins pour partie, d'une sélection automatique d'un deuxième contenu sur la base, au moins pour partie, du premier contenu et de l'entrée ; et
la mise en œuvre, au moins pour partie, d'une présentation du deuxième contenu sur le ou les plusieurs deuxièmes affichages, selon lequel la sélection du deuxième contenu est basée sur le traitement ou l'analyse du contenu du premier affichage afin de déterminer des caractéristiques identifiables dans le premier contenu, lesdites caractéristiques identifiables étant utilisées pour rechercher et identifier au moins un élément parmi une application liée, un service lié ou un contenu lié pour un affichage sur au moins l'un des un ou plusieurs deuxièmes affichages.

10. Équipement selon la revendication 9, selon lequel l'équipement est en outre mis en œuvre pour effectuer :
la sélection d'un troisième contenu sur la base, au moins pour partie, du premier contenu et de l'entrée ; et
la mise en œuvre, au moins pour partie, d'une présentation du troisième contenu dans le premier affichage, selon lequel le troisième contenu remplace le premier contenu.

11. Équipement selon la revendication 10, selon lequel l'équipement est en outre mis en œuvre pour effectuer :
la réception d'une autre entrée pour la désactivation de l'un ou des plusieurs deuxièmes affichages ;
la mise en œuvre, au moins pour partie, de la désactivation de l'un ou des plusieurs deuxièmes affichages ; et
la mise en œuvre, au moins pour partie, d'une présentation du premier contenu dans le premier affichage, selon lequel le premier contenu remplace le troisième contenu.

12. Équipement selon l'une quelconque des revendications 9 à 11, selon lequel l'équipement est en outre mis en œuvre pour effectuer la sélection d'une application, d'un service, d'un contenu internet, ou d'une combinaison de ceux-ci associée au premier contenu, selon lequel le deuxième contenu comporte une interface utilisateur présentant l'application sélectionnée, le service sélectionné, le contenu internet sélectionné, ou une combinaison de ceux-ci.

13. Équipement selon l'une quelconque des revendications 9 à 12, selon lequel l'entrée est une action physique provoquant un mouvement du premier affichage par rapport au deuxième affichage.

14. Équipement selon l'une quelconque des revendications 9 à 13, selon lequel le premier contenu est du contenu multimédia et le deuxième contenu est le même contenu multimédia, du contenu multimédia lié, ou une combinaison de ceux-ci, et selon lequel l'équipement est en outre mis en œuvre pour effectuer :
la mise en œuvre, au moins pour partie, d'une présentation de commandes de lecture indépendantes pour le premier affichage, le ou les plusieurs deuxièmes affichages, ou une combinaison de ceux-ci.

15. Équipement selon l'une quelconque des revendications 9 à 14, selon lequel le premier affichage et le ou les plusieurs deuxièmes affichages sont fournis dans l'équipement, et l'équipement est configuré pour comporter un projecteur, et selon lequel le premier affichage est un écran projeté du projecteur et au moins l'un des deuxièmes affichages est un écran d'affichage du dispositif.

16. Équipement selon l'une quelconque des revendications 9 à 15, selon lequel le premier affichage et le ou les plusieurs deuxièmes affichages sont sensibles au toucher, et selon lequel le premier affichage et le ou les plusieurs deuxièmes affichages sont montés configurés de sorte que au moins l'un parmi le premier affichage et le ou les plusieurs deuxièmes affichages est visible.

17. Produit de programme d'ordinateur comprenant des instructions de code informatique, lorsque elles sont exécutées par un ou plusieurs processeurs, à pour effet de faire fonctionner un équipement de manière à mettre en œuvre le procédé selon l'une quelconque des revendications 1 à 8.
